# EUROPÄISCHE PATENTSCHRIFT

(11) **EP 0 971 981 B1**
(45) Veröffentlichungstag und Bekanntmachung des Hinweises auf die Patenterteilung: **13.10.2004**
(21) Anmeldenummer: 98916987.5
(22) Anmeldetag: 18.03.1998
(51) Int. Cl.: C08L 71/02, C08L 61/28, C08J 3/03

(54) **EMULGATOREN FÜR AMINOHARZE**
EMULSIFIERS FOR AMINO RESINS
EMULSIFIANTS POUR RESINES AMINO

(30) Priorität: 04.04.1997 DE 19714016
(43) Veröffentlichungstag der Anmeldung: 19.01.2000
(73) Patentinhaber: BASF AKTIENGESELLSCHAFT, 67056 Ludwigshafen (DE)
(72) Erfinder: WEISS, Wolfram, D-67112 Mutterstadt (DE); KUMMER, Matthias, D-67273 Weisenheim (DE); NIESSNER, Manfred, D-67105 Schifferstadt (DE); SCHUPP, Hans, D-67549 Worms (DE)
(86) Internationale Anmeldenummer: PCT/EP1998/001554
(87) Internationale Veröffentlichungsnummer: WO 1998/045370

(56) Entgegenhaltungen:
- EP-A- 0 000 796
- WO-A-96/40815
- GB-A- 1 462 292
- GB-A- 1 497 912
- US-A- 3 310 416
- US-A- 3 907 736
- DATABASE WPI Section Ch, Week 8333 Derwent Publications Ltd., London, GB; Class A21, AN 83-737326 XP002072815 & JP 58 113 247 A (SUMITOMO BAKELITE CO)

## Beschreibung

Die Erfindung betrifft eine Mischung enthaltend ein Aminoharz und ein Polymer, welches zu mindestens 80 Gew.-% aus C₂- bis C₃-Alkylenoxidgruppen besteht.

Weiterhin betrifft die Erfindung Aminoharze mit einem Gehalt an kovalent gebundenen, vorstehend definierten Polymeren. Insbesondere betrifft die Erfindung wäßrige Dispersionen dieser Mischungen mit Aminoharzen und die Verwendung der Mischungen, Aminoharze bzw. deren wäßriger Dispersionen als Härtungsmittel in Beschichtungsmitteln.

Aufgrund ihrer Reaktivität insbesondere gegenüber Hydroxylgruppen werden Aminoharze als Härtungsmittel für polymere Bindemittel verwendet. In der Lackchemie haben sich hydrophobe, wasserunlösliche Aminoharze als besonders vorteilhaft erwiesen. Im Falle wäßriger Beschichtungsmittel ist die Verwendung der wasserunlöslichen Aminoharze naturgemäß erschwert. EP 733 686 lehrt die Dispergierung der Aminoharze mit einem anionischen Emulgator.

Das Härtungsmittel wird erst durch den Lackhersteller zum Beschichtungsmittel gegeben. Für den Lackhersteller ist es dabei von besonderer Bedeutung, daß er dieses Härtungsmittel sowohl in wäßrigen Beschichtungsmitteln, als auch in Beschichtungsmitteln, welche in organischen Lösemitteln gelöst sind, verwenden kann. Dabei sollte unabhängig vom gewählten Beschichtungsmittel eine lange Lagerstabilität, eine gute Verarbeitbarkeit und gute anwendungstechnische Eigenschaften der später erhaltenen Beschichtungen gewährleistet sein. Im Falle der wäßrigen Aminoharzdispersionen gemäß EP 733 686 führt die Verwendung in Beschichtungsmitteln auf Basis organischer Lösemittel zu nachteiligen Eigenschaften, z.B. zu einer mangelhaften Wasserfestigkeic der erhaltenen Beschichtungen.

Aus US 3 310 416 sind wasserlösliche Aminoharze mit einem Gehalt an Polyethylenglykolen bekannt. Diese Aminoharze werden als Dispergiermittel z.B. für Kohlenwasserstoffe oder Polysiloxane verwendet.

Aufgabe der vorliegenden Erfindung waren Aminoharze, welche sich als Härtungsmittel für wäßrige Beschichtungsmittel und für Beschichtungsmittel auf Basis organischer Lösemittel eignen.

Demgemäß wurden die eingangs definierten Mischungen, Aminoharze und deren wäßrige Dispersionen gefunden.

Bei dem Aminoharz, welches Bestandteil der Mischung ist, handelt es sich um Reaktionsprodukte von Aldehyden, z.B. Glyoxal, Furfurol und vorzugsweise Formaldehyd mit Aminoverbindungen wie Harnstoff oder Aminotriazin, z.B. Benzoguanamin, Acetoguanamin und vorzugsweise Melamin.

Bevorzugt sind Aminoharze auf Basis von Aminotriazinen. Besonders bevorzugt sind Reaktionsprodukte von Melamin und Formaldehyd.

Die Aminogruppen des Aminotriazine wurden bei der Umsetzung mit Aldehyd, insbesondere Formaldehyd, alkyloliert, insbesondere methyloliert, d.h. die Wasserstoffatome der Aminogruppen werden durch Alkylolgruppen ersetzt. Vorzugsweise sind mehr als 30 %, insbesondere mehr als 50 % der Wasserstoffatome durch Alkylolgruppen ersetzt. Die Aminoharze können, z.3. durch Kondensationsreaktionen der Alkylolgruppen mehrere Aminotriazinringe enthalten. Bevorzugt enthalten sie im Mittel 1 bis 20 Aminotriazinringe.

Die übrigen Alkylolgruppen sind vorzugsweise weitgehend oder vollständig mit Alkoholen, z.B. mit C₁- bis C₁₆-Alkanolen verechert. Vorzugsweise handelt es sich dabei um Butanol oder Gemische von Methanol und Butanol, mit überwiegendem Anteil an Butanol.

Die Aminoharze sind wasserunlöslich.

Die Verdünnungszahl der Aminoharze ist vorzugsweise kleiner als 20 und besonders bevorzugt kleiner als 5 insbesondere kleiner 2 oder 1 g. Die Verdünnungszahl ist ein Maß dafür, wieviel hydrophile Lösemittel einem Aminoharz zugemischt werden können, ohne daß die erhaltene Lösung trüb wird.

Die Verdünnungszahl wird durch folgendes Verfahren bestimmt:

1 g Aminoharz werden in ein 25 ml Reagenzglas gegeben. Daraufhin wird bei 23°C Wasser in 0,5 g Portionen zugegeben. Nach jeder Zugabe wird geschüttelt und beobachtet, ob nach dem Schütteln eine Trübung oder Phasenseparation (Unverträglichkeit) verbleibt. Die zugegebene Wassermenge in g nachdem eine Unverträglichkeit auftritt ist die Verdünnungszahl.

Die erfindungsgemäße Mischung enthält neben dem Aminoharz ein Polymer, welches zu mindestens 80 Gew.-%, vorzugsweise zu mindestens 90 Gew.-% aus C₂- bis C₃-Alkylenoxidgruppen besteht. Es kann sich dabei ausschließlich um Ethylenoxidgruppen, Propylenoxidgruppen oder um Ethylenoxid und Propylenoxidgruppen handeln.

Bevorzugt enthält das Polymer im Mittel mindestens 10, besonders bevorzugt mindestens 20 Alkylenoxidgruppen. Die maximale Anzahl dieser Gruppen beträgt vorzugsweise 500, besonders bevorzugt 300 und ganz besonders bevorzugt 200.

Bevorzugte Polymere sind solche der Formel 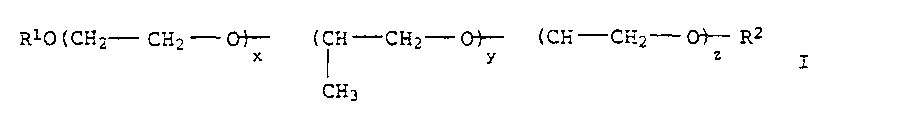 und Formel 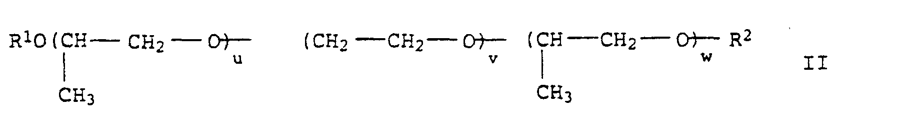 worin R¹ und R² unabhängig voneinander für ein Wasserstoffatom, eine C₁- bis C₂₀-Alkylgruppe oder eine C₁- bis C₂₀-Acylgruppe stehen.

Bevorzugt stehen R¹ und R² für ein Wasserstoffatom und eine C₁-C₄-Alkylgruppe, insbesondere Methyl oder n-Butyl.

Die Variablen x, y, z stehen vorzugsweise für mindestens 1. Bevorzugt handelt es sich daher sowohl bei Formel I als auch II um 3-Blockcopolymere (EO-PO-EO in Formel I und PO-EO-PO in Formel II).

Derartige Polymere sind bekannt und z.B. unter der Bezeichnung Pluronic® im Handel von BASF erhältlich.

Der Gehalt des Polymeren in der Mischung beträgt vorzugsweise 0,1 bis 50 Gew.-Teile, besonders bevorzugt 0,5 bis 10 Gew.-Teile bezogen auf 100 Gew.-Teile Aminoharz.

Das Polymere dient als Emulgator, d.h. Dispergiermittel für die Dispergierung des wasserunlöslichen Aminoharzes in Wasser.

Dazu kann das Polymere z.B. der bei der Herstellung des Aminoharzes erhaltenen Lösung des Aminoharzes in einem organischen Lösemittel, im allgemeinen dem Veretherungsalkohol, zugesetzt werden.

Die erhaltene Mischung kann dann durch Zugabe von Wasser in eine wäßrige Dispersion des Aminoharzes überführt werden.

Das Polymere kann z.B. auch zunächst in Wasser gelöst und die wäßrige Lösung dem Aminoharz zugesetzt werden.

Die erhaltene wäßrige Dispersion des Aminoharzes kann dann als Härtungsmittel in wäßrigen Beschichtungsmitteln verwendet werden.

Grundsätzlich ist es natürlich auch möglich, das Aminoharz und das Polymere getrennt oder zusammen direkt dem wäßrigen Beschichtungsmittel zuzusetzen und das Aminoharz darin mit Hilfe des Polymeren zu dispergieren.

Eine andere Ausführungsform der Erfindung besteht darin, daß das Polymere mit dem wasserunlöslichen Aminoharz umgesetzt wird, d.h. ein Teil der Alkylolgruppen des Aminharzes mit diesem Polymer verethert sind. Auch für diesen Fall gelten die obigen Ausführungen über das Aminharz, das Polymere und die Gewichtsanteile der beiden; in Formeln I und II entfällt dann einer der Reste R¹ und R², an dessen Stelle tritt die Bindung zum Aminoharz. Das durch Umsetzung mit den Polymeren erhaltene Aminoharz ist weiterhin wasserunlöslich und hat die obige Verdünnungszahl ist jedoch in Wasser, wie oben für die Mischung beschrieben, dispergierbar und wird entsprechend als Härtungsmittel in Beschichtungsmitteln verwendet.

Beschichtungsmittel enthalten ein polymeres Bindemittel und gegebenenfalls weitere Additive, wie Pigmente, Farbstoffe, Verlaufsmittel, Verdicker etc.

Das polymere Bindemittel ist durch einen Gehalt an aktiven wasserstoffatomen (OH-, NH-, SH-Gruppen) mit Aminoharzen vernetzbar, d.h. härtbar.

Als Bindemittel geeignet sind z.B. Alkydharze, Polyesterharze, Epoxiharze, Polyurethanharze, radikalische Polymerisate auf Basis von Acrylaten, Vinylestern, Dienen und Vinylaromaten oder deren Gemische.

Bevorzugt sind radikalische Polymerisate, Polykondesate oder Polyaddukte mit OH-Gruppen, vorzugsweise mit einer Hydroxylzahl von 20 bis 200 mg KOH/g Substanz (nach DIN 53240).

Die Bindemittel und somit auch die Beschichtungsmittel können z.B. in Form von Lösungen in Wasser oder organischen Lösungsmittel oder in Form wäßriger Dispersionen vorliegen.

Ein wesentlicher Vorteil der Erfindung besteht darin, daß die erfindungsgemäßen Mischungen bzw. die erfindungsgemäßen, mit den Polymeren modifizierten Aminoharze oder die wäßrigen Dispersionen dieser Mischungen und Aminoharze als Härtungsmittel sowohl für wäßrige Beschichtungsmittel als auch für in organischen Lösemitteln vorliegende Beschichtungsmitteln verwendet werden können und in beiden Fällen Beschichtungen mit guten anwendungstechnischen Eigenschaften, insbesondere einer guten Wasserfestigkeit und Haftung ergeben.

Die wäßrigen Dispersionen der Mischungen oder mit den Polymeren modifizierten Aminoharze sind lagerstabil. Auch die Beschichtungsmittel, welche die Mischungen oder die mit den Polymeren modifizierten Aminoharze enthalten, sind lagerstabil.

Die erfindungsgemäßen Beschichtungsmittel, welche ein polymeres Bindemittel und das erfindungsgemäße Härtungsmittel enthalten, können durch beliebige Methoden, z.B. Streichen, Rakeln, Spritzen auf beliebige Substrate, z.B. aus Holz, Metall, Papier, Kunststoff aufgebracht werden.

Nach dem Auftragen erfolgt die Härtung und Entfernung des Wassers bzw. organischen Lösemittels im allgemeinen durch Trocknen bei erhöhten Temperaturen oder durch Einbrennen.

### Beispiele

### A Polymere (Emulgatoren)

- A1: Pluronic® PE 6400 (PO-EO-Blockcopolymerisat, Molmasse des Poly-PO-Blocks 1750, EO-Anteil 40 Gew.-%).
- A2: Pluronic® PE 6800 (PO-EO-Blockcopolymerisat, Molmasse des Poly-PO-Blocks 1750, EO-Anteil 80 Gew.-%).
- A3: Pluronic® PE 9400 (PO-EO-Blockcopolymerisat, Molmasse des Poly-PO-Blocks 2750, EO-Anteil 40 Gew.-%).
- A4 (Vergleich): Emulphor® OPS 25 (ethoxyliertes Natrium-p-Octylphenol-Sulfat, 25 mol EO pro mol Alkylphenol); 34 gew.-%ige Lösung in Wasser

### B) Aminoharze

- B1: Luwipal® LR 8891 (butyliertes, teilalkyliertes Melamin-Formaldehyd-Harz in n-Butanol, Feststoffgehalt 75 %).
- B2: Luwipal® LR 8817 (methyliertes, teilalkyliertes Benzoguanamin-Formaldehyd-Harz in Isobutanol, Feststoffgehalt 80 %).
- B3: aus 1000 g Luwipal® LR 8891 mit einem Feststoffgehalt von 75 % werden bei 50 mbar 80 ml Butanol abdestilliert. Anschließend wird mit 115 ml Butylglykol auf einen Feststoffgehalt von 72 % eingestellt.
- B4: aus 1000 g Luwipal® LR 8891 mit einem Feststoffgehalt von 75 % werden bei 50 mbar 80 ml Butanol abdestilliert. Anschließend werden 24 g A3 (= 2,3 Gew.-%, bezogen auf A3 und B1) zugesetzt und mit 115 ml Butylglykol auf einen Aminoharzgehalt von 72 % eingestellt.
- B5: 985 g Luwipal® LR 8891 mit einem Feststoffgehalt von 75 Gew.-% werden mit 2,8 g p-Toluolsulfonsäure-Monohydrat und 7 g A2 versetzt. Bei Innentemperaturen zwischen 85°C und 95°C werden unter reduziertem Druck 190 ml Butanol abdestilliert. Anschließend wird die p-Toluolsulfonsäure mit 105 mol-% Dimethylethanolamin neutralisiert und bei 60°C mit 120 ml Butylglykol versetzt. Man erhält ein mit A2 modifiziertes Aminoharz mit einem Feststoffgehalt von 75 %.
- B6: 2,3 Gew.-% A4 (fest) werden im Aminoharz B1 gelöst (Gewichtsangabe bezogen auf Summe A4, fest, und B1)

### Anwendungsbeispiele

### C) Herstellung von wäßrigen Melaminharz-Emulsionen

### Methode I: Zugabe des Emulgators zum Aminoharz

In einem 150 ml-Polyethylenbecher werden 60 g der Aminoharzlösung, welche den Emulgator enthält, vorgelegt und unter ständigem Rühren mit einem mit Dissolverscheibe ausgerüsteten Laborrührer bei Umdrehungen von 500 bis 1000 pro Minute tropfenweise innerhalb von 10 Minuten mit der Wassermenge versetzt, die rechnerisch zu einer Aminoharz-Emulsion mit einem Feststoffgehalt von 45 % führt. Es wird anschließend noch 30 Minuten nachgerührt.

### Methode II: Zugabe des Emulgators zum Wasser

In einem 150 ml-Polyethylenbecher werden 60 g der Aminoharzlösung vorgelegt und unter ständigem Rühren mit einem mit Dissolverscheibe ausgerüsteten Laborrührer bei Umdrehungen von 500 bis 1000 pro Minute tropfenweise innerhalb von 10 Minuten mit der wäßrigen Lösung, welche den Emulgator enthält, versetzt, die rechnerisch zu einer 45 %igen Aminoharz-Emulsion führt. Es wird anschließend noch 30 Minuten nachgerührt.

Für die entstandenen feinteiligen Emulsionen werden folgende Eigenschaften ermittelt (pH-Werte mit einer Glaselektrode bei 23°C, Viskositätsmessung mit einem Brookfield-Viskosimeter, Spindel 3, bei 10 Umdrehungen/Minute und 23°C):

| Beispiel | Methode | Aminoharz | Emulgator | Emulgatormenge (Gew.-%) | pH-Wert | Viskosität (Pas) |
|---|---|---|---|---|---|---|
| C1 | | B4 | A3 | 2,3 | 4,8 | 2,8 |
| C2 | I | B5 | A2 | 0,7 | 5,5 | 1,25 |
| C3 (Vergleich) | I | B6 | A4 (Vergleich) | 2,3 | 6,1 | 0,35 |
| C4 | II | B1 | A1 | 1,4 | 5,6 | 1,9 |
| C5 | II | B2 | A2 | 0,7 | 8, 0 | 0,45 |
| C6 | II | B3 | A3 | 0,7 | 5,6 | 2,0 |
| C7 (Vergleich) | II | B1 | A4 (Vergleich) | 0,7 | 6,6 | 0,9 |

### D) Wäßriger Polyester-Einbrennlack

### Beispiel D1:

38 g einer 55 %igen Polyesterharzlösung (Bayhydrol® D155) in 16,5 % Butylglykol, 6,8 % Isobutanol, 18 % Wasser und 3,7 % Dimethylethanolamin, mit einem Hydroxylgruppengehalt (lösemittelfrei) von 1,5 % und einer Säurezahl (lösemittelfrei) von 42 mg KOH/g werden mit 42 g Wasser verdünnt und anschließend mit 20 g der Melaminharzemulsion C1 unter Rühren versetzt. Es resultiert ein 30 %iger wäßriger Polyesterlacke mit einer Viskosität bei 23°C von 3,2 Pas.

### Vergleichsbeispiel D2:

Es wird wie bei D1 verfahren, jedoch anstelle der Melaminharzemulsion C1 die Vergleichsemulsion C3 verwendet: Lackviskosität bei 23°C: 2,0 Pas 23°C.

### Vergleichsbeispiel D3:

Es wird wie bei D1 verfahren, jedoch anstelle der Melaminharzemulsion Beispiel C1 11 g einer 80 %igen, wäßrigen Lösung des methanolveretherten, teilalkylierten Luwipal® 073 eingesetzt. Es handelt sich hierbei also um ein wasserlösliches Melaminharz ohne Emulgatorzusatz. Nach Verdünnen mit 25 g Wasser wird ein 40 %iger Polyesterlack erhalten. Lackviskosität bei 23°C: 4,2 Pas.

### Prüfung im Schwitzwassertest:

Die Wasserlacke D1-D3 werden mit einem 200-µm-Filmziehrahmen auf 200 x 90 x 0,75 mm Tiefziehbleche aufgezogen, 10 Minuten bei Raumtemperatur abgelüftet, 10 Minuten bei 50°C vorgetrocknet und 20 Minuten in einem Umlufttrockenschrank bei 130°C eingebrannt. Es ergaben sich transparente Beschichtungen mit einer Schichtdicke von 20 bis 25 µm. Nach 24 stündiger Wartezeit werden die Prüfbleche mit der beschichteten Seite nach unten 7 Tage lang über einem Wasserbad von 60°C gelagert. Nach weiteren 7 Tagen Lagerung bei 50 % rel. Luftfeuchte und 23°C werden folgende Unterschiede beobachtet.

Die Beschichtung mit dem erfindungsgemäßen Wasserlack D1 ist unverändert, der Vergleich mit dem einen ionischen Emulgator enthaltenden Wasserlack D2 ist ganzflächig unterrostet und der Vergleich mit dem ein methanolverethertes Melaminharz enthaltenden Wasserlack D3 ist ganzflächig gerissen und abgelöst sowie das Prüfblech verrostet.

### E) Lösemittel-haltiger Acrylatklarlack

### Allgemeine Vorschrift für die Herstellung eines lösemittelhaltigen Klarlackes

Aus 50 g eines OH-gruppenhaltigen Polyacrylats (Luprenal® 240 S) mit einer OH-Zahl von 65 mg KOH/g und einem Feststoffgehalt von 60 Gew.-% und 20 g Aminoharz (fest), und einer für einen Feststoffgehalt von 50 Gew.-% ausreichenden Menge eines Kohlenwasserstoffs (Solvesso® 100) wird unter Rühren ein Klarlack hergestellt.

| Acrylatklarlacke | Aminoharz | Viskosität bei 23°C |
|---|---|---|
| E1 (Vergleich) | B1 | 150 mPas |
| E2 | B4 | 155 mPas |
| E3 (Vergleich | B6 | 155 mPas |

### Prüfung im Gradientenofen

Der lösemittelhaltige Klarlack wird mit einem 200-µm-Filmziehramen auf ein 567 x 90 x 0,75 mm Tiefziehblech aufgezogen, 10 Minuten abgelüftet und in einem Gradientenofen, Typ 2612, der Fa. Byk, 30 Minuten über eine Temperaturspanne von 90°C bis 190°C eingebrannt. Nach 24 stündiger Lagerung bei 50 % rel. Luftfeuchte und 23°C werden nacheinander folgende Prüfungen in den einzelnen Temperaturzonen durchgeführt:
- Der Verlauf wird visuell bestimmt.
- Die Wasserbeständigkeit prüft man durch 60 minütige Lagerung der einen Seite des beschichteten Blechs, auf der Längskante stehend, in einem Wasserbad, Eintauchtiefe ca. 3 cm, und bestimmt danach die Mindest-Einbrenntemperatur, die notwendig war, um eine nicht abreibbare, fingernagelharte, optisch unveränderte Beschichtung zu erhalten.
- Die Schichtdicke wird mit einem Schichtdickenmeßgerät, Typ Deltascope, der Fa. Fischer, Sindelfingen bestimmt.
- Die Pendeldämpfung wird ermittelt nach DIN 53157 mit einem Gerät, Typ 5840, der Fa. Byk.
- Die Gitterschnittprüfung erfolgt nach DIN 53151 mit einem Gitterschnittmesser und Tesafilm.
- Die Erichsen-Tiefung wird nach DIN 53156 mit einem Gerät, Typ 5313, der Fa. Byk, ermittelt.

### Ergebnisse:

| | E1 (Aminoharz B1) | | | E2 (Aminoharz B4) | | | E3 (Aminoharz B6) | | |
|---|---|---|---|---|---|---|---|---|---|
| Verlauf | gut | | | gut | | | gut | | |
| Wasserbeständigkeit ab °C | 160 | | | 160 | | | >190 | | |
| Temperaturzone (°C) | 120 | 150 | 180 | 120 | 150 | 180 | 120 | 150 | 180 |
| Schichtdicke (µm) | 40 | 40 | 40 | 39 | 39 | 38 | 40 | 39 | 38 |
| Pendeldämpfung (Ausschläge) | 89 | 92 | 96 | 70 | 90 | 93 | 63 | 86 | 91 |
| Gitterschnitt (Note 0-5) | 4,5 | 5 | 4 | 4 | 4,5 | 3,5 | 4,5 | 5 | 3 |
| Erichsen-Tiefung (mm) | 7,7 | 4,7 | 2,7 | 7,6 | 4,8 | 2,5 | 6,1 | 3,8 | 2,2 |

### Diskussion der Ergebnisse:

Das Aminoharz B4, welches den erfindungsgemäßen Emulgator enthält, führt in lösemittelhaltigen Lacken nicht zu einer Verschlechterung der Eigenschaften. Das Aminoharz B6, welches einen Emulgator gemäß EP 733 686 enthält, führt zu einer Verschlechterung der Wasserbeständigkeit.

## Patentansprüche

1. Wäßrige Dispersion einer Mischung, enthaltend ein wasserunlösliches Aminoharz und ein Polymer, welches zu mindestens 80 Gew. % aus C₂ bis C₃ Alkylenoxidgruppen besteht.

2. Wäßrige Dispersionen gemäß Anspruch 1, **dadurch gekennzeichnet, daß** das Aminoharz eine Verdünnungszahl, bestimmt durch Zugabe von Wasser bei 23°C bis zum Verbleiben einer Trübung oder Phasenseparation, gemessen in zugegebener Wassermenge in g pro 1 g Aminoharz, kleiner 20 aufweist.

3. Wäßrige Dispersion gemäß einem der vorstehenden Ansprüche, **dadurch gekennzeichnet, daß** Alkylolgruppen im Aminoharz mit Butanol oder Gemischen von Methanol und Butanol, mit überwiegendem Anteil an Butanol, verethert sind.

4. Wäßrige Dispersion gemäß Anspruch 1 bis 3, wobei der Gehalt des Polymeren 0,1 bis 50 Gew.-Teile, bezogen auf 100 Gew.-Teile des Aminoharzes beträgt.

5. Wäßrige Dispersion gemäß Anspruch 1 bis 4, wobei das Polymer mindestens 10 Alkylenoxideinheiten enthält.

6. Wäßrige Dispersion gemäß einem der Ansprüche 1 bis 5, wobei es sich um ein Polymer der Formel 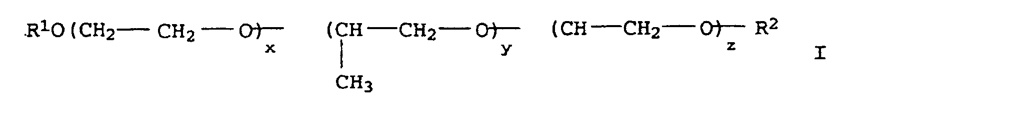 worin
R¹ und R² unabhängig voneinander für ein Wasserstoffatom, eine C₁- bis C₂₀-Alkylgruppe oder eine C₁- bis C₂₀-Acylgruppe stehen und
x, Y, z für eine ganze Zahl von 0 bis 100 stehen, mit der Bedingung, daß die Summe aus x + z + y mindestens 10 ergibt,
oder um ein Blockcopolymer der Formel 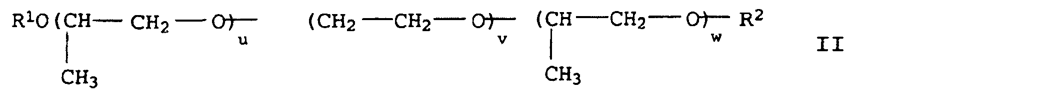 worin
R¹ und R² die vorstehende Bedeutung haben und
u, v, w für eine ganze Zahl von 1 bis 100 stehen, mit der Bedingung, daß die Summe aus u + v + w mindestens 10 ergibt,
handelt.

7. Wäßrige Dispersion von wasserunlöslichen Aminoharzen mit Polymeren, wie in den Ansprüchen 1 und 4 bis 6 definiert, **dadurch gekennzeichnet, daß** ein Teil der Alkylolgruppen des Aminoharzes mit diesem Polymer verethert sind.

8. Verwendung der wäßrigen Dispersion gemäß einem der Ansprüche 1 bis 7 als Härtungsmittel in Beschichtungsmitteln.

9. Verwendung gemäß Anspruch 8, **dadurch gekennzeichnet, daß** es sich bei den Beschichtungsmitteln um Alkydharze, Polyesterharze, Polyurethanharze,radikalische Polymerisate auf Basis von Acrylaten, Vinylestern, Dienen und Vinylaromaten oder deren Gemische handelt.

## Claims

1. An aqueous dispersion of a mixture comprising a water-insoluble amino resin and a polymer which consists to the extent of at least 80% by weight of C₂- to C₃-alkylene oxide groups.

2. An aqueous dispersion as claimed in claim 1, wherein the amino resin has a dilution number, determined by adding water at 23°C until clouding or phase separation remains, measured in amount of water added in g per 1 g of amino resin, of less than 20.

3. An aqueous dispersion as claimed in any of the preceding claims, wherein alkylol groups in the amino resin have been etherified with butanol or with mixtures of methanol and butanol predominantly containing butanol.

4. An aqueous dispersion as claimed in claims 1 to 3, where the content of the polymer is from 0.1 to 50 parts by weight based on 100 parts by weight of amino resin.

5. An aqueous dispersion as claimed in claims 1 to 4 where the polymer contains at least 10 alkylene oxide units.

6. An aqueous dispersion as claimed in any of claims 1 to 5 where the polymer is of the formula 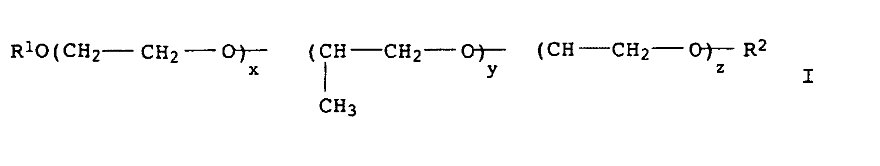 where
R¹ and R² independently are hydrogen, C₁- to C₂₀-alkyl or C₁- to C₂₀-acyl and
x, y, z are an integer from 0 to 100 with the proviso that the sum of x + y + z is at least 10
or is a block copolymer of the formula 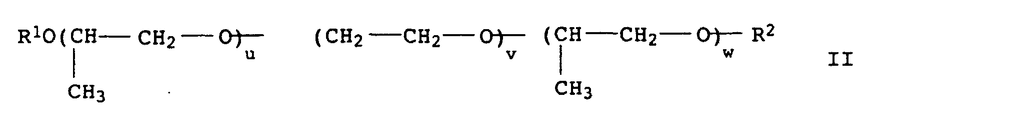 where
R¹ and R² are as defined above and
u, v, w are an integer from 1 to 100 with the proviso that the sum of u + v + w is at least 10.

7. An aqueous dispersion of a water-insoluble amino resin with a polymer as defined in any of claims 1 and 4 to 6, wherein some of the alkylol groups of the amino resin have been etherified with said polymer.

8. The use of an aqueous dispersion as claimed in any of claims 1 to 7 as a curing agent in a coating composition.

9. The use as claimed in claim 8, wherein the coating composition is an alkyd resin, a polyester resin, a polyurethane resin, a free-radical polymer based on acrylates, vinyl esters, dienes and vinylaromatics or a mixture thereof.

## Revendications

1. Dispersion aqueuse d'un mélange, contenant une résine amino non hydrosoluble et un polymère, lequel est composé à au moins 80% de groupes oxyde d'alkylène en C₂ à C₃.

2. Dispersions aqueuses selon la revendication 1, **caractérisées en ce que** la résine amino présente un indice de dilution, déterminé en ajoutant de l'eau à 23°C jusqu'à persistance d'un trouble ou d'une séparation de phases, mesuré en quantité d'eau ajoutée en g pour 1 g de résine amino, inférieur à 20.

3. Dispersion aqueuse selon l'une quelconque des revendications précédentes, **caractérisée en ce que** les groupes alkylol dans la résine amino ont été éthérifiés avec du butanol ou des mélanges de méthanol et de butanol avec une proportion prépondérante de butanol.

4. Dispersion aqueuse selon les revendications 1 à 3, dans laquelle la teneur en polymère va de 0,1 à 50 parties en poids par rapport à 100 parties en poids de la résine amino.

5. Dispersion aqueuse selon les revendications 1 à 4, dans laquelle le polymère contient au moins 10 motifs oxyde d'alkylène.

6. Dispersion aqueuse selon l'une quelconque des revendications 1 à 5, dans laquelle le polymère est un polymère de formule 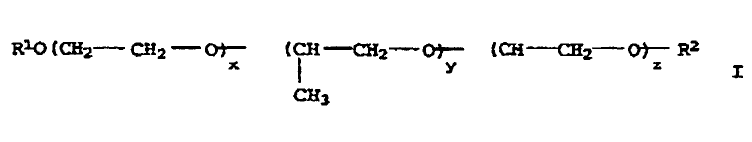 dans laquelle
R¹ et R² représentent, indépendamment l'un de l'autre, un atome d'hydrogène, un groupe alkyle en C₁ à C₂₀ ou un groupe acyle en C₁ à C₂₀,
x, y, z représentent des nombres entiers de 0 à 100, avec la condition que la somme de x + z + y soit égale à au moins 10,
ou un copolymère séquencé de formule 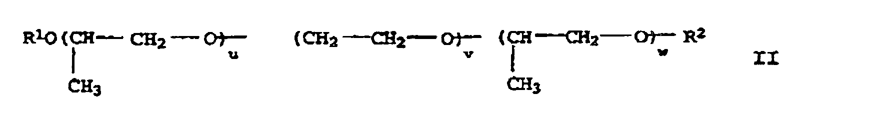 dans laquelle
R¹ et R² ont la signification susmentionée et
u, v, w représentent des nombres entiers de 0 à 100, avec la condition que la somme de u + v + w soit égale à au moins 10.

7. Dispersion aqueuse de résines amino non hydrosolubles avec un polymère, telle que définie dans les revendications 1 et 4 à 6, **caractérisée en ce qu'**une partie des groupes alkylol de la résine amino a été éthérifiée avec ce polymère.

8. Utilisation de la dispersion aqueuse selon l'une quelconque des revendications 1 à 7 en tant qu'agent durcisseur dans des matières de revêtement.

9. Utilisation selon la revendication 8, **caractérisée en ce que** les matières de revêtement sont des résines alkyde, des résines polyester, des résines polyuréthanne, des polymères radicalaires à base d'acrylates, d'esters vinyliques, de diènes et de composés vinylaromatiques ou des mélanges de ceux-ci.
